# EUROPÄISCHE PATENTSCHRIFT

(11) **EP 3 302 342 B1**
(45) Veröffentlichungstag und Bekanntmachung des Hinweises auf die Patenterteilung: **10.11.2021**
(21) Anmeldenummer: 16732242.9
(22) Anmeldetag: 03.06.2016
(51) Int. Cl.: A61C 7/00, A61C 7/08, A61C 7/12

(54) **VERFAHREN ZUM HERSTELLEN EINER KIEFERORTHOPÄDISCHEN KORREKTURVORRICHTUNG**
METHOD FOR PRODUCING AN ORTHODONTIC CORRECTING DEVICE
PROCÉDÉ POUR LA FABRICATION D'UN DISPOSITIF DE CORRECTION ORTHODONTIQUE

(30) Priorität: 03.06.2015 DE 102015108848
(43) Veröffentlichungstag der Anmeldung: 11.04.2018
(73) Patentinhaber: K Line Europe GmbH, 40474 Düsseldorf (DE)
(72) Erfinder: KANDIL, Sherif, 40489 Düsseldorf (DE)
(74) Vertreter: Kalkoff & Partner Patentanwälte mbB
(86) Internationale Anmeldenummer: PCT/EP2016/062642
(87) Internationale Veröffentlichungsnummer: WO 2016/193424

(56) Entgegenhaltungen:
- US-A1- 2002 051 951
- US-A1- 2003 157 454

## Beschreibung

Die Erfindung betrifft ein Verfahren zum Herstellen einer kieferorthopädischen Korrekturvorrichtung.

Kieferorthopädische Korrekturvorrichtungen sind in zahlreichen Ausführungen bekannt, so auch als unauffällige, transparente Korrekturvorrichtungen aus synthetischem Material, die auf der Grundlage einer Erfassung der Ist-Stellung der Zähne und der Berechnung einer Soll-Stellung der Zähne in einer Soll-Stellung hergestellt und auf die zu korrigierenden Zähne aufgesetzt werden. Die Zähne werden mit einer solchen Korrekturvorrichtung anfangs starken Kräften ausgesetzt, durch die die Schiene die Zähne in die Soll-Stellung bewegt. Mit zunehmender Verschiebung der Zähne in die Soll-Stellung übt die Korrekturvorrichtung jedoch schwächere Kräfte auf die zu korrigierenden Zähne aus. Zudem kann der wasserhaltige Speichel im Mund, der auf das Material der Korrekturvorrichtung einwirkt, dazu beitragen, dass die von der Korrekturvorrichtung auf die Zähne ausgeübte Kraft durch Ermüdung des Materials weiter reduziert wird. Ein typisches Herstellverfahren für transparente kieferorthopädische Korrekturvorrichtungen wird in der Patentanmeldung US 2013/0122447 (Marc Lemchen) offenbart. Auch die US 2002/0051951 A1 und die US 2003/0157454 A1 zeigen bekannte Korrekturvorrichtungen, bei denen jedoch Materialien eingesetzt werden, die bei Kontakt mit bestimmten Flüssigkeiten oder bei Wärmezufuhr ihre Gestalt ändern können. Bei der US 2003/157454 A1 ermöglichen diese Materialien eine zusätzliche Expansion der Korrekturvorrichtung, welche den Einsatz der Korrekturvorrichtung über größere Strecken ermöglicht.

Bei größeren Korrekturen ist gewöhnlicherweise eine umfangreiche Folge von Korrekturvorrichtungen erforderlich, die jeweils neu vermessen und hergestellt werden müssen, manchmal nur im Abstand von Wochen. Die große Zahl der Arztbesuche ist belastend für Patienten.

Es ist Aufgabe der Erfindung ein Verfahren zur Herstellung einer patientenfreundlichen kieferorthopädischen Korrekturvorrichtung vorzuschlagen.

Diese Aufgabe wird gelöst mit einem Verfahren nach Anspruch 1.

Das erfindungsgemäße Verfahren zum Herstellen einer kieferorthopädischen Korrekturvorrichtung sieht eine Korrekturvorrichtung mit einem Draht oder einer Wand vor, die an einer Zahnoberfläche anliegt und die ein dynamisches, synthetischen Material aufweist, das bei Zutritt von Wasser in berechenbarer Weise seine Gestalt ändert, mit den Schritten
- Erfassen der Ist-Stellung eines zu korrigierenden Zahns
- Berechnen der Soll-Stellung des zu korrigierenden Zahns
- Berechnen des Drahts oder der Wand der Korrekturvorrichtung unter Berücksichtigung der Ist-Stellung, der Soll-Stellung und der Gestaltänderung des synthetischen Materials
- Herstellen einer Korrekturvorrichtung mit einem an der Zahnoberfläche in Ist-Stellung anliegenden Draht oder einer an der Zahnoberfläche in der Ist-Stellung anliegenden Wand, der oder die mindestens abschnittsweise bei Zutritt von Wasser in berechneter Weise seine oder ihre Gestalt verändert, um den Zahn in Richtung auf die Soll-Stellung zu bewegen.

Soweit im Zusammenhang mit dieser Erfindung Bezug auf einen Zahn genommen wird, gelten sämtliche Ausführungen auch für das Korrigieren der Zahnstellung mehrerer Zähne bzw. von Kiefer-Fehlstellungen. Die kieferorthopädische Korrekturvorrichtung kann eine Schiene sein, die ausschließlich aus dem dynamischen synthetischen Material besteht. Sie ist erfindungsgemäß jedoch eine Korrekturvorrichtung, die aus einer Kombination von dynamischem synthetischem Material mit herkömmlichem, statischem synthetischem Material besteht, wobei das statische synthetische Material in seiner Form nicht durch Wärme oder Feuchtigkeit geändert werden kann. Weiter kann synthetisches Material, also dynamisches Material oder dynamisches Material in Kombination mit statischem Kunststoffmaterial, mit einem anderen Werkstoff, typisch z. B. einer Kunststoff-Metall-Kombination, eingesetzt werden. Nach einer weiteren Alternative kann das synthetische Material mit natürlichem oder synthetischen Gummi oder Kautschuk kombiniert werden. Bevorzugt tragen alle verwendeten Werkstoffe dazu bei, Zahn oder Kiefer zu richten, d. h., in die Soll-Stellung zu überführen.

Die erfindungsgemäß hergestellte Korrekturvorrichtung kann auch als Draht ausgeführt sein, der mit Fixierungen an den Zähnen befestigt ist. Die Fixierungen werden meist auf die Zahnoberfläche aufgeklebt. Soweit im Zusammenhang mit dieser Erfindung ein Draht erwähnt wird, wird wesentlich auf die Form des Drahts abgestellt, die einen im Verhältnis zur Länge kleinen Querschnitt aufweist, wobei der Querschnitt typisch zwischen 3,048 mm und 4,572 mm beträgt. Die Form des Draht-Querschnitts ist nicht festgelegt, sie kann rund oder eckig sein. Eingesetzt werden z. B. Drähte aus Edelstahl oder aus Legierungen wie z. B. Nitonol (Nickel-Titan-Legierung) oder aus Beta-Titan, ebenfalls einer titanhaltigen Legierung. Erfindungsgemäß kann die Fixierung oder der Draht mindestens abschnittsweise aus einem nachstehend näher beschriebenen dynamischen synthetischen Material hergestellt sein. Eine durch Einwirken von bewegungsinduzierenden Reizen ausgelöste Formänderung des dynamischen synthetischen Materials bewirkt ein Verändern der Position des Drahts, der in der veränderten Position ein Bewegen eines oder mehrere Zähne verursacht. Nach einer vorteilhaften Ausführung der Erfindung werden an sich bekannte Fixierungen vom Zahnarzt eingesetzt, während lediglich der erfindungsgemäß in Ist-Stellung hergestellte Draht, der sich durch bewegungsinduzierende Reize in die Soll-Stellung bewegt, von z. B. einem Labor hergestellt wird. Der extern hergestellte Draht wird dann in die bereits vorhandenen Fixierungen eingesetzt. Bei dieser Ausführung wird bevorzugt bei der Erfassung der Ist-Stellung der Zähne auch die Lage der Fixierungen mit erfasst, um den Draht optimal angepasst herstellen zu können. Soweit im Folgenden ein Draht als Ausführungsform der erfindungsgemäßen Korrekturvorrichtung für Zähne kurz angesprochen ist, ist ein Draht gemeint, der durch Verbindung mit einem dynamischen, synthetischen Material von einer Ist- in eine Soll-Stellung bewegt wird, wobei das dynamische Material entweder am Draht oder an der Fixierung angebracht ist.

Das erfindungsgemäße Verfahren wird mit einem dynamischen, synthetischen Material durchgeführt, dass bei Zutritt von Wasser seine Gestalt in berechenbarer Weise ändert. Ein solches Material, in der Regel ein thermoplastischer Kunststoff, besteht zum Beispiel aus einem hydrophilen Acrylmonomer oder -oligomer. Häufig wird dieses Material mit einem statischen synthetischen Material kombiniert. Typisch werden mindestens zwei unterschiedliche Polymere, beispielsweise ein hydrophobes Acrylmonomer oder -oligomer als statisches synthetisches Material und ein dynamisches synthetisches Material in Kombination verarbeitet, so dass das statische und das dynamische Material aneinander anliegen, vorzugsweise schichtweise oder abschnittsweise, z. B. in Form von Flecken (engl. Patches) aneinander anliegen. Dabei reagiert das erste Polymer nicht auf bewegungsinduzierende Reize, während das zweite Polymer auf bewegungsinduzierende Reize reagiert, insbesondere durch Form- und / oder Volumenveränderung. Bewegungsinduzierende Reize können der Kontakt mit Feuchtigkeit bzw. Flüssigkeit, insbesondere Wasser und wasserhaltige Flüssigkeiten, aber auch ein Lösungsmittel sowie Wärme und / oder Strahlung sein. Typische erste Polymere sind Phenoxyethylacrylat, Trimethylolpropantriacrylat und Isobornylacrylat. Typische zweite Polymere sind beispielsweise ein Hydroxyethylacrylat oder ein Polyglycol, insbesondere ein Polyethylenglycol sein, so wie in der WO 2015/084422 A1 offenbart.

Im Zusammenhang mit der Erfindung sind der Kontakt mit Flüssigkeit und /oder Wärme, hier Körperwärme, bevorzugte Reize, die die Bewegung des synthetischen Materials induzieren. Besonders bevorzugt ist ein thermoplastisches Material, bei dem das erste Polymer nicht auf den Kontakt mit Wasser, insbesondere Speichel und / oder Wärme reagiert, also als hydrophob bezeichnet werden kann, während ein zweites, als hydrophil zu bezeichnendes Polymer Wasser bzw. Speichel aufnimmt und / oder auf Wärme reagiert dabei seine Form verändert und / oder sein Volumen vergrößert. Die Vergrößerung des Volumens, die durch Einlagern von Wasser oder z. B. durch weiteres chemisches Reagieren des zweiten Polymers erfolgen kann, bewirkt entweder unmittelbar eine Verformung der Korrekturvorrichtung oder sie bewirkt eine Verlagerung des ersten Polymers in einem Ausmaß, dass durch das Volumen des aufgenommenen Wassers bzw. die eingebrachte Wärmeenergie vorgegeben ist. Ist die Zusammensetzung des dynamischen, synthetischen Materials oder alternativ der Anteil des zweiten Polymers und dessen Aufnahmekapazität für Wasser und / oder Wärme bekannt, ist das Ausmaß der durch Änderung von Form oder Volumen erzeugten Gestaltveränderung des synthetischen Materials berechenbar. Das dynamische und das statische synthetische Material können frei kombiniert werden, z. B. in Schichten, in Streifen, in Flecken, in Kreisen oder Kugeln oder in beliebigen anderen Formen, so dass die gewünschte Bewegung der Korrekturvorrichtung gewährleistet werden kann. Entsprechend kann die durch das dynamische synthetische Material erzeugte Bewegung linear oder rotierend sein. Entsprechend können rollende, faltende, dehnende oder schwindende Bewegungen erzeugt werden. Es können auch jeweils mehr als ein dynamisches und mehr als ein statisches synthetisches Material kombiniert werden, um eine optimal bewegliche, bei z. B. Einwirken des Speichels oder der Körperwärme sich verformende Korrekturvorrichtung herzustellen. Dabei kann ein erstes dynamisches synthetisches Material auf einen anderen induzierenden Reiz reagieren als das zweite dynamische synthetische Material, z. B. ein erstes Material auf Wärme und ein zweites Material auf Feuchtigkeit.

Solche thermoplastischen Materialien sind aus der US 2015/0158244 A1 und der WO 2015/084422 A1 bekannt und werden von der Firma Stratasys Inc. in Verbindung mit dem 4D Printing Project angeboten. Diese Materialien sind in den Tabellen 1 bis 25 am Ende der Beschreibung aufgeführt. Es ist bekannt oder kann vom Fachmann mit wenigen Versuchen ermittelt werden, welche Gestaltveränderung der Kontakt mit Flüssigkeit und / oder Wärme bewirkt bzw. welche Kapazität das Material aus erstem und zweitem Polymer zur Aufnahme von Flüssigkeit, insbesondere Wasser oder wasserhaltiger Speichel und / oder Wärme, insbesondere Körperwärme, hat. Stratasys Inc. setzt mit den in der US 2015/0158244 A1 und der WO 2015/084422 A1 beschriebenen synthetischen Materialien ein Druckverfahren in die Praxis um, das von Skylar Tibbits vom Self-Assembly Lab des Massachusetts Institute of Technology MIT, Boston, USA, entwickelt wurde und zu dem Autodesk Inc. die Software entwickelt hat, mit dem synthetisches Material, insbesondere dynamisches synthetisches Material mittels eines 3D Druckers zu einem Produkt aufgebaut werden kann, das dann unter Einwirkung von bewegungsinduzierenden und damit gestaltverändernden Reizen seine äußere Form ändert.

Der 4D-Druck, auch als additives Herstellen in Verbindung mit einer Automontage unter Nutzung des Faktors Zeit wird seit kurzem als energiesparendes Herstellungsverfahren genutzt. 3D-Drucker, die mehrere unterschiedliche Materialien verarbeiten können, können z. B. hybride Gegenstände aus zwei oder mehr Materialien mit präziser Materialverteilung herstellen. 3D-Drucker können also Gegenstände aus zwei oder mehr Materialien herstellen, die sich in einer oder mehreren physikalischen oder chemischen Eigenschaften unterscheiden. Solche Drucker, zu denen z. B. der Objet®- und der Connex-Drucker von Stratasys Ltd., Israel, zählt, sind in den Patenten US 6,569,373, 7,225,045, 7,300,619 und 7,500,846, aber auch in den Patentanmeldungen US 2013/0073068 und US 2013/0040091 beschrieben.

Die nachträgliche Verformbarkeit des dynamischen, synthetischen Materials, die durch externe Reize wie insbesondere Feuchtigkeit oder Wärme induziert wird, kann genutzt werden, indem Produkte aus dem Material hergestellt werden, die in trockenem Zustand ihre ursprüngliche Form wahren, die aber bei Zutritt von Flüssigkeit und/ der Wärme ihre Gestalt ändern. Die Gestaltänderung erfolgt, weil Flüssigkeit eingelagert und / oder Wärme aufgenommen wird. Da die Kapazität der Wasseraufnahme -und damit das Ausmaß der Gestaltveränderung - durch den Anteil des zweiten Polymers berechnet wird, kann unter anderem durch die Zusammensetzung, aber auch durch die Menge des eingesetzten synthetischen Materials das Ausmaß der Gestaltveränderung eingestellt werden. Die kieferorthopädische Korrekturvorrichtung weist einen Draht oder eine Wand auf, der bzw. die an der Oberfläche des bzw. der zu korrigierenden Zähne anliegt. Der Draht bzw. die Wand der Korrekturvorrichtung, der bzw. die sich in berechneter Weise verformt, übt durch und während des Verformens Kraft auf den bzw. die Zähne auf, an denen der Draht oder die Wand anliegt. Das Verformen wird bevorzugt eingeleitet durch den wasserhaltigen Speichel und/ oder die Körperwärme in der Mundhöhle des Patienten, der die Korrekturvorrichtung umspült. Im Folgenden wird eine solche erfindungsgemäß hergestellte Korrekturvorrichtung als dynamische Korrekturvorrichtung bezeichnet.

Das erfindungsgemäße Verfahren sieht vor, dass zunächst die Ist-Stellung eines zu korrigierenden Zahns erfasst wird. Dies kann sowohl mittels Abnehmen eines Abdrucks mit Gussmasse erfolgen als auch alternativ durch digitales Erfassen des bzw. der zu korrigierenden Zähne. Wird ein Abdruck mit Gussmasse hergestellt, wird das Gussmodell vorzugsweise digitalisiert.

Weiter erfolgt das Berechnen der Soll-Stellung des bzw. der zu korrigierenden Zähne. Das Berechnen der Soll-Stellung ist an sich aus dem Stand der Technik bekannt; hierfür und für das digitale Erfassen des Ist-Zustands steht kommerziell verfügbare Software zur Verfügung, z. B. folgende Software: "Orthoanalyzer" von der Firma 3shape.

Das Berechnen der Form des Drahts oder der Wand und der Wandstärke der dynamischen Korrekturvorrichtung unter Berücksichtigung der Ist-Stellung, der Soll-Stellung und der Gestaltänderung des dynamischen synthetischen Materials während des Korrekturvorgangs berücksichtigt die vorstehend geschilderten Eigenschaften des dynamischen synthetischen Materials, ggf. in Verbindung mit einem statischen synthetischen Material. Eine Software bzw. ein Algorithmus, der diese Berechnung vornimmt, ist verfügbar, beispielsweise die Software von Autodesk Inc., z. B. Cyborg Tool oder VoxCad Simulator. Diese Software steuert die 3D-Drucker von z. B. Stratasys (Objet®- oder Connex-Serie) so an, dass in guter Auflösung das dynamische synthetische Material, optional in der Kombination mit dem statischen synthetischen Material, präzise nach Vorgabe aufgetragen wird, bis die gewünschte Korrekturvorrichtung hergestellt ist. Die Umsetzung dieser Software auf die konkrete Verwendung für kieferorthopädische Korrekturvorrichtungen ist eine handwerkliche Anpassung.

Das Herstellen bzw. Drucken der Korrekturvorrichtung kann z. B. mit oder ohne Hilfe einer Stützvorrichtung erfolgen, die nur während des Druckvorgangs verwendet wird und aus der die Korrekturvorrichtung ggf. später herausgelöst wird. Je nach verwendetem Material kann es erforderlich sein, die Korrekturvorrichtung zunächst zu trocknen oder auszuhärten, bevor das Stützmaterial entfernt wird.

Die Strecke, um die ein Zahn von der Ist-Stellung in die Soll-Stellung zu bewegen ist, wird durch einen Vergleich von der Soll-Stellung mit der Ist-Stellung ermittelt, außerdem wird die Richtung, in die der Zahn zu bewegen ist, durch diesen Soll-Ist-Abgleich definiert. Ausmaß und Richtung der Bewegung der zu korrigierenden Zähne von der Ist-Stellung zur Soll-Stellung wird durch die Gestaltung des Drahts bzw. der Wand der dynamischen Korrekturvorrichtung, insbesondere durch die Gestaltung einzelner, aneinander angrenzender Draht- oder Wandabschnitte und/ oder der Wandstärke umgesetzt. Die Korrekturvorrichtung kann in einer einfachen Ausführung ausschließlich aus dynamischem synthetischem Material bestehen. Nach einer vorteilhaften Ausführung der Erfindung grenzen Abschnitte dynamischen, synthetischen Materials und Abschnitte statischen synthetischen oder metallischen Materials, typischerweise thermoplastisches Material, aneinander an. Dabei üben Abschnitte aus dynamischem synthetischen Material entweder unmittelbar Kraft auf die an dem Draht oder an der Wand anliegende Zahnoberfläche aus oder die Abschnitte aus dynamischem synthetischen Material wirken als Hebel und bewirken mittelbar, dass Abschnitte aus statischem synthetischen Material Kraft auf die an diesen Draht- oder Wandabschnitten anliegende Zahnoberfläche ausüben. Die Berechnung der Draht- oder Wandstärke kann an verschiedenen Stellen des Zahns unterschiedlich ausfallen, je nach dem, wie weit bzw. in welche Richtung der Zahn zu bewegen ist, bzw. wie viel Kraft auf die Zahnoberfläche auszuüben ist.

Das Herstellen einer dynamischen Korrekturvorrichtung erfolgt mit einer an der Zahnoberfläche in der Ist-Stellung anliegenden Wand oder mit einem Draht, die bzw. der mindestens abschnittsweise bei Zutritt von Wasser in berechneter Weise ihre bzw. seine Gestalt verändert, um den Zahn in Richtung auf die Soll-Stellung zu bewegen. Die Herstellung erfolgt z. B. durch Gießen bzw. Pressen oder bevorzugt durch Drucken, z. B. mit einem 3-D-Drucker, bei dem pulverförmiges synthetisches Material auf vorgegebene Weise zu einer Korrekturvorrichtung gefügt wird. Vorteilhaft werden hier abschnittsweise dynamisches oder statisches synthetisches Materialien aufgetragen. Dabei kann damit begonnen werden zunächst ein statisches synthetisches Material aufzutragen und anschließend ein dynamisches synthetisches Material oder umgekehrt. Das statische und das synthetische Material können in Schichten aufgetragen werden, vorteilhaft können diese Materialien aber auch abschnittsweise oder in Form von Flecken (engl.: patches) aufgetragen werden, um das optimale Bewegen eines Zahns zu gewährleisten. Typische Anordnungen für das statische und das dynamische synthetische Material für einzelne Zähne bzw. Zahnfehlstellungen können in einer Datenbank gespeichert werden, um später bei dem Erstellen einer weiteren Korrekturvorrichtung abgerufen und in eine neue Korrekturvorrichtung für einen oder mehrere Zähne integriert zu werden. Dies ermöglicht ein besonders wirtschaftliches Arbeiten. Die vierte Komponente, die reizinduzierte Bewegung, wird durch das Einsetzen der Korrekturvorrichtung in die Mundhöhle genutzt. Sowohl beim Gießen oder Pressen als auch beim Drucken der Korrekturvorrichtung kann das synthetische Material mit anderen Werkstoffen kombiniert werden, z. B. mit Metall insbesondere in Form von Klammern oder Drähten.

Der besondere Vorteil der erfindungsgemäß hergestellten kieferorthopädischen Korrekturvorrichtung liegt darin, dass sie an der Zahnoberfläche im Ist-Zustand anliegt, ohne den Zahn unmittelbar zu verformen. Erst durch das Einwirken von Speichel aus der Mundhöhle des Patienten beginnt die Korrekturvorrichtung sich mindestens abschnittsweise zu verformen. Das Verformen der dynamischen Korrekturvorrichtung bewegt den zu korrigierenden Zahn von der Ist-Stellung in Richtung auf die Soll-Stellung. Dadurch ist das Einsetzen der erfindungsgemäß hergestellten Korrekturvorrichtung besonders einfach und angenehm für den Patienten. Da der Speichel der Mundhöhle sowie die Körpertemperatur stetig auf die Korrekturvorrichtung einwirken und dadurch die Gestaltveränderung induzieren und unterstützen, nimmt die auf den Zahn einwirkende Kraft nicht ab, sondern der Zahn wird stetig unter annähernd gleichbleibender Krafteinwirkung in die nach der Berechnung ermittelte Richtung auf die Soll-Stellung zu bewegt. Die Kraft, die während der Gestaltveränderung durch die Korrekturvorrichtung auf den zu korrigierenden Zahn ausgeübt wird, ist gering, aber ausreichend, um den Zahn von der Ist-Stellung in die Soll-Stellung zu bewegen, doch wird nicht zu viel Kraft auf den Zahn ausgeübt, so dass keine unerwünschte Belastung von Zahn oder Kiefer auftritt.

Ein Vorteil der erfindungsgemäß hergestellten Korrekturvorrichtung ist es, dass die kontinuierlich auf den Zahn ausgeübte Kraft den Zahn weiter von der Ist-Stellung auf die Soll-Stellung bewegt als eine Korrekturvorrichtung nach dem Stand der Technik. Dadurch können geringe bis mittlere Fehlstellungen unter Anwendung der Korrekturvorrichtung mit nur einer Schiene oder Klammer korrigiert werden, während nach dem Stand der Technik auch bei geringen bis mittleren Fehlstellungen schon zwei oder mehr Korrekturvorrichtungen einzusetzen sind.

Um das Bewegen eines Zahns in optimaler Weise zu gewährleisten, wird die dynamische Korrekturvorrichtung so gefertigt, dass bevorzugt einzelne Abschnitte des Drahts oder der Wand und/ oder die Stärke der Wand unterschiedlich gefertigt werden, insbesondere durch unterschiedlichen Einsatz von dynamischem und statischem synthetischen Material. Abschnitte des Drahts oder der Wand, der bzw. die an der Zahnoberfläche anliegen, werden vorteilhaft in unterschiedlicher Wandstärke gefertigt, um das Ausmaß der auf den Zahn ausgeübten Kraft einzustellen. Auf diese Weise kann besonders wirksam die optimale Bewegung des zu korrigierenden Zahns gewährleistet werden. Die Wandstärke kann, falls erforderlich auch auf Null reduziert werden. Die Wand der Korrekturvorrichtung kann also auch Öffnungen enthalten an den Stellen, an denen die Wandstärke auf Null reduziert ist.

Die optimale Bewegung eines Zahns kann weiter dadurch gefördert werden, dass der Draht bzw. die Wand oder insbesondere ein Abschnitt der Wand der kieferorthopädischen Korrekturvorrichtung aus mehreren Lagen oder Flecken des synthetischen Materials aufgebaut ist. Dabei können vorteilhaft mehrere Lagen von statischem oder dynamischen synthetischen Materials flecken- oder schichtweise den Draht oder die Wand oder einen Abschnitt der Wand der Korrekturvorrichtung bilden, so dass in den einzelnen Flecken oder Lagen die Kapazität zur Aufnahme von Feuchtigkeit bzw. Flüssigkeit und / oder Wärme unterschiedlich ist und damit auch das Ausmaß der Gestaltänderung und entsprechend die auf den zu korrigierenden Zahn einwirkende Kraft. Weiter vorteilhaft ist eine mehrlagige Korrekturvorrichtung, bei der das synthetische Material mit einem anderen Werkstoff wie z. B. Metall kombiniert wird.

Nach einer vorteilhaften Ausführung des erfindungsgemäßen Verfahrens wird eine Folge von dynamischen Korrekturvorrichtungen hergestellt, bei denen nach Erreichen einer Soll-Stellung einer ersten Schiene eine neue Ist-Stellung erfasst und eine zweite Korrekturvorrichtung mit einer neuen Soll-Stellung hergestellt wird. Die Ist-Stellung der zweiten Schiene ist in der Regel der Soll-Stellung der ersten Schiene vergleichbar. Diese Vorgehensweise ist dann empfehlenswert, wenn die Differenz oder Wegstrecke zwischen der Ist-Stellung und der Soll-Stellung besonders groß ist. Der Patient erhält dann eine Folge von Korrekturvorrichtungen, mit denen dann die gesamte Differenz bzw. Wegstrecke von der Ist-Stellung bis zur endgültigen Soll-Stellung in zwei oder mehr Abschnitten zurückgelegt wird. Da die mit Hilfe der einzelnen Korrekturvorrichtung zurückgelegte Wegstrecke des zu korrigierenden Zahns bei der erfindungsgemäß hergestellten Korrekturvorrichtung größer ist als bei Schienen nach dem Stand der Technik, sind zum Erreichen der endgültigen Soll-Stellung weniger Teilstrecken bzw. zweite Korrekturvorrichtungen erforderlich als nach dem Stand der Technik. Entsprechend müssen dem Patienten weniger Korrekturvorrichtungen angepasst werden, so dass das erfindungsgemäße Verfahren als besonders patientenfreundlich zu bezeichnen ist.

Die einzelnen vorstehend geschilderten Verfahrensschritte zur Herstellung der kieferorthopädischen Korrekturvorrichtung können sämtlich einzeln oder in Kombination genutzt werden, um eine optimale, patientenfreundliche Soll-Stellung von Zähnen und Kiefer zu erreichen. Dabei wird angestrebt, mit einer einzelnen Korrekturvorrichtung eine möglichst weitgehende Korrektur zu erreichen, um den Patienten mit möglichst wenigen Wechseln der Korrekturvorrichtung zu belasten.

Kein eigenständiger Bestandteil der Erfindung ist eine kieferorthopädische Korrekturvorrichtung mit einer Wand aus synthetischem Material, wobei die Wand an einer Zahnoberfläche anliegt, wobei das synthetische Material bei Zutritt von Wasser in vorberechneter Weise mindestens abschnittsweise seine Gestalt von einer Ist-Stellung in eine Soll-Stellung ändert. Diese Schiene ist besonders einfach in Benutzung zu nehmen, da sie nach der Herstellung vor der Aufnahme der Benutzung die aktuelle Ist-Stellung der Zähne aufweist. Erst nach Aufnahme der Benutzung durch Aufsetzen der dynamischen Korrekturvorrichtung auf die Zähne wird nach Zutritt von Flüssigkeit, hier: des Speichels aus der Mundhöhle, und/ oder Wärme, hier: Körperwärme, die Gestaltveränderung ausgelöst und damit das Bewegen der zu korrigierenden Zähne aus der Ist-Stellung in Richtung auf die Soll-Stellung ausgelöst.

Die Wand der kieferorthopädischen Korrekturvorrichtung kann, wie vorstehend beschrieben, Abschnitte unterschiedlicher Wandstärke aufweisen; sie kann auch Öffnungen aufweisen. Ebenso kann die Wand bzw. der Draht vollständig oder abschnittsweise mehrlagig ausgeführt sein, wobei Flecken oder Lagen gleichen oder unterschiedlichen synthetischen Materials, insbesondere eine Kombination aus dynamischem und statischem synthetischen Material, aber auch Lagen aus synthetischem Material und anderen Werkstoffen, insbesondere Metall, miteinander kombiniert werden können. Für einen Draht, der als kieferorthopädische Korrekturvorrichtung eingesetzt wird, können auch einzelne Abschnitte aus statischem Material und dynamischem Material hintereinander angeordnet werden, insbesondere, um zu gewährleisten, dass der Draht sich an definierten Stellen verformt. Diese Maßnahmen ermöglichen eine besonders individuelle Anpassung der Korrekturvorrichtung an die jeweils erforderliche kieferorthopädische Korrektur.

Schließlich ist die vorstehend beschriebene Verwendung des dynamischen synthetischen Materials zur Herstellung kieferorthopädischer Korrekturvorrichtungen Gegenstand der Erfindung.

Details der Erfindung werden nachfolgend erläutert. Es zeigen:
- Fig. 1: Perspektivische Ansicht einer dynamischen kieferorthopädischen Korrekturschiene
- Fig. 2: Perspektivische Ansicht einer dynamischen kieferorthopädischen Korrekturschiene
- Fig. 2a, 2b: Details der kieferorthopädischen Korrekturschiene aus Fig. 2

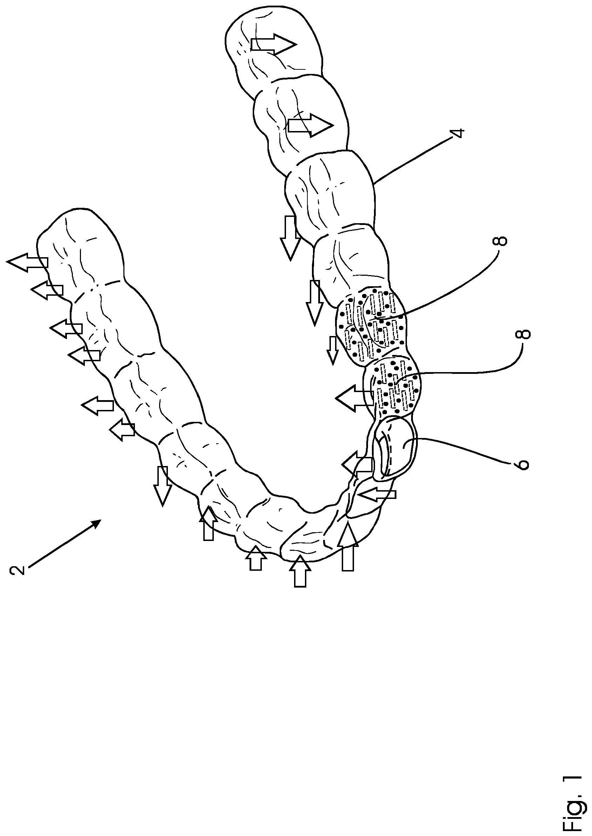

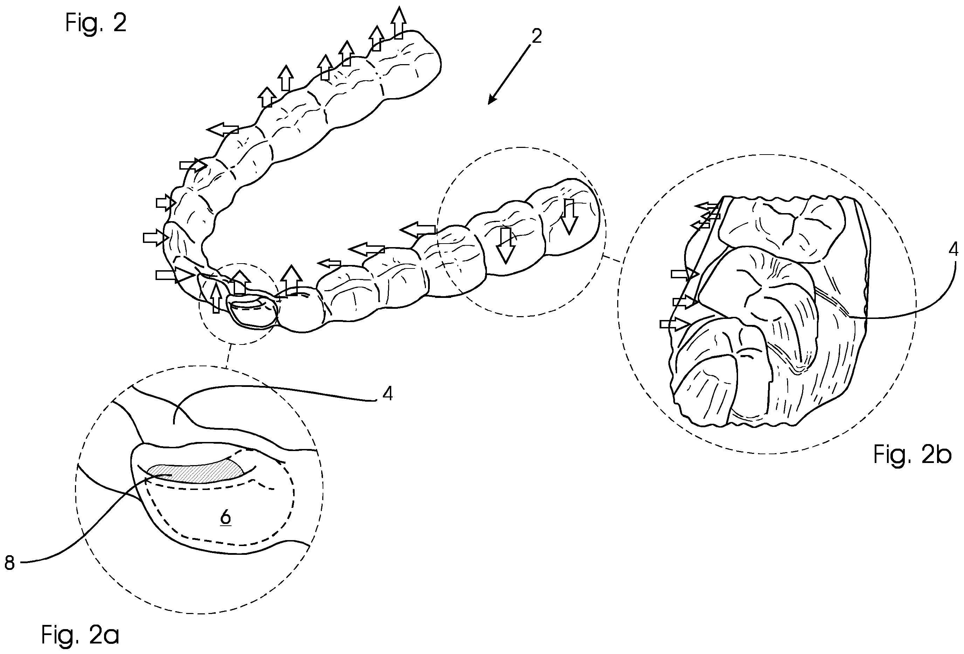

Fig. 1 und 2 zeigen jeweils eine kieferorthopädische Korrekturschiene 2 aus thermoplastischem Kunststoff, also aus einem synthetischen Material. Bekannte Korrekturschienen werden z.B. aus Polycarbonat, Polyester wie z.B. Polyethylenterephthalat mit Glycol (PETG) oder thermoplastische Elastomere wie thermoplastisches Polyurethan (TPU) hergestellt. Die nachfolgenden Ausführungen gelten in vergleichbarer Weise auch für eine Korrekturvorrichtung, die aus den Werkstoffen thermoplastischer Kunststoff und Metall hergestellt ist, z. B. als Korrekturspange oder -klammer. Das verwendete synthetische Material ist transparent, die Korrekturschiene ist also ebenfalls transparent und ist damit beim Tragen unauffällig. Es sind aber auch opake Ausführungen möglich. Wesentliches funktionales Element der Korrekturschiene 2 ist die Wand 4. Alternativ kann ein Draht als wesentliches funktionales Element der erfindungsgemäß hergestellten Korrekturvorrichtung in Verbindung mit einem dynamischen synthetischen Material eingesetzt werden. Solche Drähte, z. B. aus Edelstahl oder aus besonderen Legierungen, die z. B. als Nitinol-Legierungen (Nickel-Titan-Legierung) oder als Beta-Titan-Legierungen angeboten werden, können in Stärken von z.B. 3,048 mm (0,12 inch) bis 4,572 mm (0,18 inch) eingesetzt werden, wobei die dünneren Drähte zu Beginn der Behandlung eingesetzt werden können, während gegen Ende der Behandlung dickere Drähte eingesetzt werden können. Die Draht-Querschnitte können rund oder eckig sein.

Die Wand 4 der Korrekturschiene 2 besteht zur Korrektur eines falsch stehenden Zahns in einem ersten Abschnitt 6 aus statischem thermoplastischen Kunststoff und in einem zweiten Abschnitt 8 aus dynamischem thermoplastischen Kunststoff. Das erste Polymer, hier das statische synthetische Material, ändert seine Form oder sein Volumen nicht, wenn Feuchtigkeit bzw. Flüssigkeit, Wärme und / oder Strahlung auf das erste Polymer einwirken. Das zweite Polymer, hier das dynamische synthetische Material, ändert seine Form oder sein Volumen, wenn Feuchtigkeit bzw. Flüssigkeit, Wärme und / oder Strahlung auf das erste Polymer einwirken. Das erste und das zweite Polymer liegen aneinander an und eine Gestaltänderung des zweiten Polymers bewirkt dadurch eine Gestaltänderung des ersten Polymers. Vorliegend wird das Material bzw. die Kombination von Materialien des Lieferanten Stratasys Inc gemäß z. B. der Tabellen 1-25 verwendet, das Stratasys Inc für 4D Printing (4D Druck) anbietet. Bei diesem Material bewirkt der Kontakt mit Flüssigkeit und der Kontakt mit Wärme jeweils für sich genommen aber auch in Kombination eine Gestaltänderung des zweiten Polymers. Für die dynamische Korrekturschiene lösen also sowohl der Speichel der Mundhöhle als auch die Körpertemperatur in der Mundhöhle die abschnittsweise Gestaltänderung der Korrekturschiene aus. Der erste Abschnitt aus statischem Material erfährt durch den Kontakt mit Speichel oder Körpertemperatur keine Formänderung oder Änderung des Volumens. Der zweite Abschnitt aus dynamischem Material übt durch die Gestaltänderung entweder unmittelbar Kraft auf den Zahn bzw. die Zahnoberfläche aus, die an dem zweiten Abschnitt anliegt oder der zweite Abschnitt übt Kraft auf den ersten Abschnitt aus, von dem aus dann Kraft auf den zu korrigierenden Zahn übertragen wird. Der erste Abschnitt wirkt in diesem Fall beispielsweise wie ein Hebel auf den zweiten Abschnitt. Die Wand der Korrekturschiene ist zur Korrektur der Fehlstellung eines Zahns also aus schicht- oder fleckenartig angeordneten ersten und zweiten Abschnitten angeordnet (im Englischen: patches).

Die Pfeile in den Fig. 1, 2, 2a, 2b deuten jeweils an, in welche Richtung oder Richtungen der einzelne zu korrigierende Zahn zu bewegen ist, um eine optimale Soll-Stellung zu erreichen. Die Bewegung des Zahns kann ein Verschieben oder ein Drehen oder eine Kombination aus beiden Bewegungen sein. Die Bewegung des Zahns kann durch Druckkraft oder Zugkraft oder eine Kombination von Druck- und Zugkraft erzeugt werden. Die dynamische Korrekturschiene überträgt jeweils an der Stelle bzw. in dem Bereich Zug- oder Druckkraft, wo dies erforderlich ist. Das heißt, die dynamische Korrekturschiene ist, so wie in Fig. 2a, 2b so aus einer Kombination von ersten Abschnitten aus statischem Kunststoff und zweiten Abschnitten aus dynamischem Kunststoff aufgebaut, dass zur Korrektur eines einzelnen Zahns auf einen Abschnitt "D" der Zahnoberfläche Druckkraft ausgeübt wird, während auf einen Abschnitt "Z" der Zahnoberfläche Zugkraft ausgeübt wird. Die Richtung der durch die dynamische Korrekturschiene auf den zu korrigierenden Zahn ausgeübten Kraft wird durch die Richtung der Pfeile angedeutet. Weist die Pfeilspitze zum Zahn oder Kiefer, wird in der Regel eine Druckkraft ausgeübt. Weist die Pfeilspitze vom Zahn oder Kiefer weg, wird in der Regel eine Zugkraft ausgeübt. Die Kraft, die von der dynamischen Korrekturschiene auf den Zahn bzw. Kiefer ausgeübt wird, ist geringfügig stärker als die Kräfte, die den Zahn im Kiefer in seiner Ist-Stellung halten. Ändert sich die Gestalt der Korrekturschiene, bewirkt dies eine Bewegung des Zahns von der Ist-Stellung in Richtung auf die Soll-Stellung.

Die dynamische Korrekturschiene wird wie folgt hergestellt: Es wird ein Modell der Zähne im Ist-Zustand erstellt. Dieser Schritt ist an sich bekannt. Es wird entweder ein Abguss genommen, der dann digitalisiert werden kann oder es wird unmittelbar ein digitales Modell der Zähne erstellt. Dann wird ein digitales Modell des Soll-Zustands erstellt oder es werden mehrere aufeinander abgestimmte digitale Modelle erstellt, die schrittweise zum Soll-Zustand führen. Auch dieser Schritt bzw. diese Schritte sind an sich bekannt. Entsprechende Software ist erhältlich, z.B. "Orthoanalyzer" von Firma 3Shape.

Zur Herstellung der dynamischen Korrekturschiene wird dann der Aufbau der Wand der Korrekturschiene berechnet. Dabei wird die dynamische Korrekturschiene im Ist-Zustand der Zähne hergestellt. Der Wandaufbau erfolgt aus ersten und zweiten Abschnitten, für die das Ausmaß der Bewegung unter Einfluss von Feuchtigkeit und Wärme bekannt ist. Es ist bekannt bzw. kann in wenigen Versuchen einfach bestimmt werden, welches Ausmaß an Bewegung das dynamische synthetische Material ermöglicht. Ebenfalls in wenigen Versuchen kann ggf. ermittelt werden, in welcher Weise ein Abschnitt aus dynamischem synthetischen Material einen Abschnitt aus statischem synthetischen Material bewegen kann. Diese Information wird mit den an sich bekannten Vorgaben über den Soll-Zustand der zu korrigierenden Zähne verbunden. Die Modelle, die vom Ist-Zustand bis zum Soll-Zustand erstellt werden, werden dabei in an sich bekannter Weise als stereolithographische Dateien (STL-Dateien) in Bildform erfasst, bearbeitet und verarbeitet.

Aus der Kombination dieser Informationen wird die Wand einer Korrekturschiene vorgeschlagen, die die zu korrigierenden Zähne aus einem Ist-Zustand in einen Soll-Zustand überführt. Der Vorschlag zeigt eine Wand der Korrekturschiene mit fleckenartig angeordneten ersten und zweiten Abschnitten. Es kann sein, dass mehrere Ausführungen für die Wand der Korrekturschiene vorgeschlagen werden, die gleichwertig oder vergleichbar sind. Die Auswahl aus diesen Vorschlägen kann dann mit Blick auf eine Optimierung der Fertigungstechnik oder der Kosten oder anderer Parameter getroffen werden. Die für die Wand der jeweiligen Korrekturschiene ausgewählte Kombination erster und zweiter Abschnitte wird in eine Software eingepflegt, die die Verarbeitung von dynamischem synthetischen Material in Verbindung mit statischem synthetischen Material in einem 3D-Drucker steuert, z. B. Cyborg tool oder VoxCad.

Der Aufbau der Wand aus ersten und zweiten Abschnitten muss dabei gewährleisten, dass die zum Erreichen des Soll-Zustandes bzw. zum Bewegen des Zahns in Richtung des Soll-Zustands erforderliche Kraft auf den jeweiligen Abschnitt der Zahnoberfläche aufgebracht wird. Es wird also berechnet, wie viel statisches oder dynamisches synthetisches Material bzw. in welcher Schichtstärke das synthetische Material aufgebracht wird, oder welche Schichtfolge von dynamischem und statischem Material in ggf. mehreren Lagen aufzubringen ist oder welche verschiedenen Materialien zu kombinieren sind, um nach Einsetzen der Korrekturschiene und nachfolgendem Einwirken von Speichel und Körperwärme eine Gestaltänderung der Korrekturschiene zu bewirken. Die Gestaltänderung kann Nanometer, Mikrometer oder Millimeter betragen, da die Zahnstellung in der Regel maximal im Bereich weniger Millimeter korrigiert wird.

Nachdem die Berechnung der Korrekturschiene und die Auswahl und Materialverteilung für die ersten und zweiten Abschnitte erfolgt ist, werden diese Anweisungen umgesetzt, indem mittels eines 3-D-Druckers in an sich bekannter Weise pulverförmiges statisches oder dynamisches Material in der Weise verfestigt wird, dass die Korrekturschiene mit ersten und zweiten Abschnitten an vorgegebenen, berechneten Stellen hergestellt wird. Die Arbeitsweise eines 3-D-Druckers ist an sich bekannt und wird hier nicht näher erläutert. Die Korrekturschiene weist dabei eine Wandstärke von 0,3 mm bis 0,7 mm auf, beispielsweise 0,3 mm bis 0,4 mm an den Rändern, die im Wurzelbereich am Zahn anliegen und 0,5 mm bis 0,7 mm in den Bereichen, in denen Kraft auf den Zahn ausgeübt wird. Optional wird die Korrekturschiene nach dem Drucken noch getrocknet oder ausgehärtet, z. B. durch Polymerisieren.

Typische Werkstoffe zur Herstellung der Korrekturschiene sind in den anliegenden Tabellen 1-25 angegeben. Die nachstehend aufgeführten Materialien eigen sich zur Ausführung der vorstehend beschriebenen Erfindung. Soweit in den Tabellen gemessene Parameter (property) angegeben sind, wurden diese mit "American Standard Test Methods" gemessen. Die jeweiligen Messverfahren sind in der Spalte ASTM angegeben. Die gemessenen Einheiten sind in der Spalte "units" angegeben. Dies gilt für die Zugfestigkeit (tensile strength), die Längenstreckung bis zum Bruch (Elongation at break), den Elastizitätsmodul (modulus of elasticity), die Biegefestigkeit (flexural strength), den Biegeelastizitätsmodul (flexural modulus), die HDT-Messung (heat deflection test) nach ASTM D256, die Kerbschlagzähigkeit (Izod notched impact) nach ASTM D648, den Shore Härtetest A oder D (shore hardness A or D) und die Reißfestigkeit bzw. den Reißwiderstand (tensile tear resistance). Die Tabellen geben jeweils Hinweise auf das statische synthetische Material (Primary Material) und das dynamische synthetische Material (Secondary Material). Soweit die Titel der Tabellen die Begriffe "starr" und "gummiartig" verwenden, bezieht sich diese Formulierung auf die Eigenschaften des fertigen Produkts.

Eine typische Stratasys-Zusammensetzung, die z. B. in der WO 2015/084422 A1 genannt ist und die zur Herstellung einer Korrekturvorrichtung gewählt werden kann, weist 50-90 Gew.-% eines hydrophilen Acrylatmonomer und 10-50 Gew.-% eines hydrophoben Oligomers auf, sowie 1-3 Gew.-% eines Photoinitiators und 0,1-0,2 Gew.-% eines Stabilisators oder Inhibitors auf. Ein Beispiel für eine solche Zusammensetzung, die vorstehend allgemein definiert wurde, weist 70 Gramm Hydroxyethylacrylat als hydrophiles Monomer und 15 Gramm eines difunktionellen Bisphenol-A-basierten Expoxyacrylats auf. Weiter enthält die Zusammensetzung 2 Gramm eines Alphahydroxyketons als Photoinitiator, 0,1 Gramm eines oberflächenaktiven Silikons und 0,2 Gramm eines Hydrochinons, das als Inhibitor wirkt.

Die Korrekturschiene wird in die Mundhöhle auf die Zähne gesetzt. Das Einsetzen der Korrekturschiene ist unproblematisch, da die Korrekturschiene der Ist-Stellung der zu korrigierenden Zähne nachgebildet ist. Erst nach Einwirken von Speichel und/oder Körperwärme setzt die Gestaltänderung ein, die durch das Verformen oder eine Volumenänderung der ersten Abschnitte induziert wird und erst mit Einsetzen der Gestaltänderung wird Kraft auf die zu korrigierenden Zähne ausgeübt, die dadurch in Richtung auf die Soll-Stellung bewegt werden. Dabei kann durch die erfindungsgemäß hergestellte Korrekturschiene das Weiten von Eckzähnen, Prämolaren und Molaren um 3 mm mit einer einzigen Korrekturschiene in einem Zeitraum von 9 bis 12 Wochen erreicht werden.

**TABELLE 1 STARRE OPAKE MATERIALIEN**

| PRIMARY VEROWHITEPLUS™ RGD835 | | | |
|---|---|---|---|
| SECONDARY MATERIAL: VEROBLACKPLUS™ RGD875 | | | |
| PROPERTY | ASTM | UNITS | RGD8310-DM, RGD8320-DM, RGD8330-DM |
| Tensile strength | D-638-03 | MPa | 50-65 |
| Elongation at break | D-638-05 | % | 10-25 |
| Modulus of elasticity | D-638-04 | MPa | 2000-3000 |
| Flexural strength \| | D-790-03 | MPa | 75-110 |
| Flexural modulus | D-790-04 | MPa | 2200-3200 |
| HDT, °C @ 0.45MPa | D-648-06 | °C | 45-50 |
| Izod notched impact | D-256-06 | J/m | 20-30 |

**TABELLE 2 STARRE OPAKE MATERIALIEN**

| PRIMARY MATERIAL: VEROWHITEPLUS RGD835 | | | | |
|---|---|---|---|---|
| SECONDARY MATERIAL: TANGOBLACKPLUS™ FLX980 / TANGOPLUS™ FLX930 | | | | |
| PROPERTY | ASTM | UNITS | RGD8505-DM | RGD8525-DM |
| | | | RGD8510-DM | RGD8425-DM |
| | | | RGD8515-DM | (ONLY OBJET TANGOPLUS FLX930) |
| | | | RGD8520-DM | |
| Tensile strength | D-638-03 | MPa | 40-60 | 35-45 |
| Elongation at break | D-638-05 | % | 15-25 | 20-30 |
| Modulus of elasticity | D-638-04 | MPa | 1700-2300 | 1400-2000 |
| Flexural strength | D-790-03 | MPa | 55-75 | 45-60 |
| Flexural modulus | D-790-04 | MPa | 1500-2500 | 1400-1800 |
| HDT, °C @ 0.45MPa | D-648-06 | °C | 40-45 | 40-43 |
| Izod notched impact | D-256-06 | J/m | 22-35 | 22-35 |
| Shore hardness (D) | D2240-05 | Scale D | 81.1-85.5 | 79.5-83.5 |

**TABELLE 3 STARRE OPAKE MATERIALIEN**

| PRIMARY MATERIAL: HIGH TEMPERATURE RGD525 | | | | |
|---|---|---|---|---|
| SECONDARY MATERIAL: TANGOBLACKPLUS FLX980 | | | | |
| PROPERTY | ASTM | UNITS | RGD5205-DM | RGD5250-DM |
| | | | RGD5210-DM | |
| | | | RGD5215-DM | |
| | | | RGD5220-DM | |
| | | | RGD5225-DM | |
| Tensile strength | D-638-03 | MPa | 43-55 | 50-56 |
| Elongation at break | D-638-05 | % | 9-15 | 18-27 |
| Modulus of elasticity | D-638-04 | MPa | 1600-2700 | 1700-2400 |
| Flexural strength | D-790-03 | MPa | 50-100 | 47-70 |
| Flexural modulus | D-790-04 | MPa | 1700-2700 | 1400-2000 |
| HDT, °C @ 0.45MPa | D-648-06 | °C | 46-60 | 50-56 |
| Izod notched impact | D-256-06 | J/m | 16-19 | 16-26 |

**TABELLE 4 STARRE OPAKE MATERIALIEN**

| PRIMARY MATERIAL: VEROBLUE™ RGD840 | | | |
|---|---|---|---|
| SECONDARY MATERIAL: VEROBLACKPLUS RGD875 | | | |
| PROPERTY | ASTM | UNITS | RGD8210-DM |
| Tensile strength | D-638-03 | MPa | 50-60 |
| Elongation at break | D-638-05 | % | 15-25 |
| Modulus of elasticity | D-638-04 | MPa | 2000-3000 |
| Flexural strength | D-790-03 | MPa | 60-70 |
| Flexural modulus | D-790-04 | MPa | 1900-2500 |
| HDT, °C @ 0.45MPa | D-648-06 | °C | 45-50 |
| Izod notched impact | D-256-06 | J/m | 20-30 |

**TABELLE 5 STARRE OPAKE MATERIALIEN**

| PRIMARY MATERIAL: VERO BLACKPLUS RGD875 | | | |
|---|---|---|---|
| SECONDARY MATERIAL: TANGOBLACKPLUS FLX980 / TANGOPLUS FLX930 | | | |
| PROPERTY | ASTM | UNITS | RGD8555-DM |
| | | | RGD8455-DM |
| Tensile strength | D-638-03 | MPa | 35-45 |
| Elongation at break | D-638-05 | % | 20-30 |
| Modulus of elasticity | D-638-04 | MPa | 1400-2000 |
| Flexural strength | D-790-03 | MPa | 45-60 |
| Flexural modulus | D-790-04 | MPa | 1400-1800 |
| HDT, °C @ 0.45MPa | D-648-06 | °C | 40-43 |
| Izod notched impact | D-256-06 | J/m | 25-35 |
| Shore hardness (D) | D2240-05 | Scale D | 79.5-83.5 |

**TABELLE 6 STARRE OPAKE MATERIALIEN**

| PRIMARY MATERIAL: HIGH TEKAPERATURE RGD525 | | | |
|---|---|---|---|
| SECONDARY MATERIAL: TANGOPLUS FLX930 | | | |
| PROPERTY | ASTM | UNITS | RGD5150-DM |
| Tensile strength | D-638-03 | MPa | 45-60 |
| Elongation at break | D-638-05 | % | 18-27 |
| Modulus of elasticity | D-638-04 | MPa | 1700-2400 |
| Flexural strength | D-790-03 | MPa | 47-70 |
| Flexural modulus | D-790-04 | MPa | 1400-2000 |
| HDT, °C @ 0.45MPa | D-648-06 | °C | 50-56 |
| Izod notched impact | D-256-06 | J/m | 16-26 |

**TABELLE 7 STARRE OPAKE MATERIALIEN**

| PRIMARY MATERIAL: VEROWHITEPLUS RGD835 | | | | | |
|---|---|---|---|---|---|
| SECONDARY MATERIAL: TANGOBLACK™ FLX973 | | | | | |
| PROPERTY | ASTM | UNITS | RGD8110 - DM | RGD8120 - DM | RGD8130 - DM |
| Tensile strength | D-638-03 | MPa | 45-65 | 46-65 | 27-33 |
| Elongation at break | D-638-05 | % | 10-30 | 10-30 | 25-35 |
| Modulus of elasticity | D-638-04 | MPa | 2000-3000 | 2000-3000 | 1500-2100 |
| Flexural strength | D-790-03 | MPa | 70-100 | 70-100 | 40-50 |
| Flexural modulus | D-790-04 | MPa | 2000-3000 | 2000-3000 | 1400-1800 |
| HDT, °C @ 0.45MPa | D-648-06 | °C | 43-50 | 43-50 | 40-45 |
| Izod notched impact | D-256-06 | J/m | 20-35 | 20-35 | 30-40 |

**TABELLE 8 TRANSPARENTE MATERIALIEN**

| PRIMARY MATERIAL: RGD720 | | | |
|---|---|---|---|
| SECONDARY MATERIAL: VEROBLACKPLUS RGD875 | | | |
| PROPERTY | ASTM | UNITS | RGD7513-DM (DOTS) |
| | | | RGD7523-DM (GRID) |
| Tensile strength | D-638-03 | MPa | 50-65 |
| Elongation at break | D-638-05 | % | 15-25 |
| Modulus of elasticity | D-638-04 | MPa | 2000-3000 |
| Flexural strength | D-790-03 | MPa | 80-110 |
| Flexural modulus | D-790-04 | MPa | 2700-3300 |
| HDT, °C @ 0.45MPa | D-648-06 | °C | 45-50 |
| Izod notched impact | D-256-06 | J/m | 20-30 |

**TABELLE 9 TRANSPARENTE MATERIALIEN**

| PRIMARY MATERIAL: RGD720 | | | | | |
|---|---|---|---|---|---|
| SECONDARY MATERIAL: TANGOBLACK FLX973 | | | | | |
| PROPERTY | ASTM | UNITS | RGD7210-DM | RGD7220-DM | RGD7230-DM |
| Tensile strength | D-638-03 | MPa | 50-55 | 50-55 | 45-50 |
| Elongation at break | D-638-05 | % | 15-25 | 15-25 | 15-25 |
| Modulus of elasticity | D-638-04 | MPa | 2200-2500 | 2000-2300 | 1700-2000 |
| Flexural strength | D-790-03 | MPa | 80-90 | 75-85 | 70-80 |
| Flexural modulus | D-790-04 | MPa | 2300-2700 | 2200-2600 | 2100-2400 |
| HDT, °C @ 0.45MPa | D-648-06 | °C | 45-50 | 45-50 | 45-50 |
| Izod notched impact | D-256-06 | J/m | 20-30 | 20-30 | 20-30 |

**TABELLE 10 TRANSPARENTE MATERIALIEN**

| PRIMARY MATERIAL: VEROCLEAR™ RGD810 | | | | |
|---|---|---|---|---|
| SECONDARY MATERIAL: TANGOPLUS FLX930 / | | | | |
| TANGOBLACKPLUS FLX980 | | | | |
| PROPERTY | ASTM | UNITS | RGD8705-DM | RGD8625-DM |
| | | | RGD8710-DM | RGD8725-DM |
| | | | RGD8715-DM | |
| | | | RGD8720-DM | |
| Tensile strength | D-638-03 | MPa | 40-60 | 35-45 |
| Elongation at break | D-638-05 | % | 15-25 | 20-30 |
| Modulus of elasticity | D-638-04 | MPa | 1,700-2,300 | 1,400-2,000 |
| Flexural strength | D-790-03 | MPa | 55-75 | 45-60 |
| Flexural modulus | D-790-04 | MPa | 1,500-2,500 | 1,400-1,800 |
| HDT, °C @ 0.45MPa | D-648-06 | °C | 40-45 | 40-43 |
| Izod notched impact | D-256-06 | J/m | 22-35 | 25-35 |
| Shore hardness (D) | D2240-05 | Scale D | 81.1-85.5 | 79.5-83.5 |

**TABELLE 11 POLYPROPYLEN-ÄHNLICHE MATERIALIEN**

| PRIMARY MATERIAL: DURUSWHITE™ RGD430 | | | |
|---|---|---|---|
| SECONDARY MATERIAL: VEROWHITEPLUS RGD835, VEROBLUE RGD840, | | | |
| VEROBLACKPLUS RGD875 OR RGD720 | | | |
| PROPERTY | ASTM | UNITS | RGD4310-DM |
| | | | RGD4410-DM |
| | | | RGD4510-DM |
| | | | RGD4710-DM |
| Tensile strength | D-638-03 | MPa | 30-40 |
| Elongation at break | D-638-05 | % | 40-50 |
| Modulus of elasticity | D-638-04 | MPa | 1200-1600 |
| Flexural strength | D-790-03 | MPa | 40-50 |
| Flexural modulus | D-790-04 | MPa | 1300-1700 |
| HDT, °C @ 0.45MPa | D-648-06 | °C | 40-45 |
| Izod notched impact | D-256-06 | J/m | 35-45 |

**TABELLE 12 POLYPROPYLEN-ÄHNLICHE MATERIALIEN**

| PRIMARY MATERIAL: VEROWHITEPLUS RGD835 | | | |
|---|---|---|---|
| SECONDARY MATERIAL: TANGOPLUS FLX930 / TANGOBLACKPLUS FLX980 | | | |
| PROPERTY | ASTM | UNITS | RGD8430-DM |
| | | | RGD8530-DM |
| Tensile strength | D-638-03 | MPa | 29-38 |
| Elongation at break | D-638-05 | % | 25-35 |
| Modulus of elasticity | D-638-04 | MPa | 1100-1700 |
| Flexural strength | D-790-03 | MPa | 35-45 |
| Flexural modulus | D-790-04 | MPa | 1200-1500 |
| HDT,°C @ 0.45MPa | D-648-06 | °C | 38-41 |
| Izod notched impact | D-256-06 | J/m | 21-40 |
| Shore hardness (D) | D2240-05 | Scale D | 76.1-81.7 |

**TABELLE 13 POLYPROPYLEN-ÄHNLICHE MATERIALIEN**

| PRIMARY MATERIAL: VEROBLACKPLUS RGD875 | | | |
|---|---|---|---|
| SECONDARY MATERIAL: TANGOPLUS FLX930 / TANGOBLACKPLUS FLX980 | | | |
| PROPERTY | ASTM | UNITS | RGD8460-DM |
| | | | RGD8560-DM |
| Tensile strength | D-638-03 | MPa | 29-38 |
| Elongation at break | D-638-05 | % | 25-35 |
| Modulus of elasticity | D-638-04 | MPa | 1100-1700 |
| Flexural strength | D-790-03 | MPa | 35-45 |
| Flexural modulus | D-790-04 | MPa | 1200-1500 |
| HDT,°C @ 0.45MPa | D-648-06 | °C | 38-41 |
| Izod notched impact | D-256-06 | J/m | 21-40 |
| Shore hardness (D) | D2240-05 | Scale D | 76.1-81.7 |

**TABELLE 14 POLYPROPYLEN-ÄHNLICHE MATERIALIEN**

| PRIMARY MATERIAL: VEROCLEAR RGD810 | | | |
|---|---|---|---|
| SECONDARY MATERIAL: TANGOPLUS FLX930 / TANGOBLACKPLUS FLX980 | | | |
| PROPERTY | ASTM | UNITS | RGD8630-DM |
| | | | RGD8730-DM |
| Tensile strength | D-638-03 | MPa | 29-38 |
| Elongation at break Modulus of elasticity | D-638-05 D-638-04 | % MPa | 25-35 1100-1700 |
| Flexural strength | D-790-03 | MPa | 35-45 |
| Flexural modulus | D-790-04 | MPa | 1200-1500 |
| HDT, °C @ 0.45MPa | D-648-06 | °C | 38-41 |
| Izod notched impact | D-256-06 | J/m | 21-40 |
| Shore hardness (D) | D2240-05 | Scale D | 76.1-81.7 |

**TABELLE 15 POLYPROPYLEN-ÄHNLICHE MATERIALIEN**

| PRIMARY MATERIAL: RIGUR™ | | | |
|---|---|---|---|
| SECONDARY MATERIAL: TANGOBLACKPLUS FLX980 | | | |
| PROPERTY | ASTM | UNITS | RGD4805-DM |
| | | | RGD4810-DM |
| | | | RGD4815-DM |
| | | | RGD4820-DM |
| Tensile strength | D-638-03 | MPa | 25-45 |
| Elongation at break | D-638-05 | % | 35-45 |
| Modulus of elasticity | D-638-04 | MPa | 1200-1800 |
| Flexural strength | D-790-03 | MPa | 30-40 |
| Flexural modulus | D-790-04 | MPa | 1000-1400 |
| HDT,°C @ 0.45MPa | D-648-06 | °C | 43-48 |
| Izod notched impact | D-256-06 | J/m | 50-70 |
| Shore hardness (D) | D2240-05 | Scale D | 81.1-85.5 |

**TABELLE 16 POLYPROPYLEN-ÄHNLICHE MATERIALIEN**

| PRIMARY MATERIAL: RIGUR | | | |
|---|---|---|---|
| SECONDARY MATERIAL: TANGOPLUS FLX930 / TANGOBLACKPLUS FLX980 | | | |
| PROPERTY A | STM | UNITS | RGD4825-DM |
| | | | RGD4830-DM |
| | | | RGD4625-DM |
| | | | RGD4630-DM |
| Tensile strength | D-638-03 | MPa | 25-35 |
| Elongation at break | D-638-05 | % | 35-45 |
| Modulus of elasticity | D-638-04 | MPa | 900-1500 |
| Flexural strength | D-790-03 | MPa | 20-35 |
| Flexural modulus | D-790-04 | MPa | 800-1200 |
| HDT, °C @ 0.45MPa | D-648-06 | °C | 43-46 |
| Izod notched impact | D-256-06 | J/m | 50-70 |
| Shore hardness (D) | D2240-05 | Scale D | 79.5-83.5 |

**TABELLE 17 GUMMIÄHNLICHE MATERIALIEN**

| PRIMARY MATERIAL: TANGOBLACKPLUS FLX980 / TANGOPLUS FLX930 | | | | | | | | |
|---|---|---|---|---|---|---|---|---|
| SECONDARY MATERIAL: VEROWHITEPLUS RGD835 | | | | | | | | |
| PROPERTY | ASTM | UNITS FLX9840-DM | | FLX9850-DM | FLX9860-DM | FLX9870-DM | FLX9885-DM | FLX9895-DM |
| | | | FLX9740-DM | FLX9750-DM | FLX9760-DM | FLX9770-DM | FLX9785-DM | FLX9795-DM |
| Tensile strength | D-412 | MPa | 1.3-1.8 | 1.9-3.0 | 2.5-4.0 | 3.5-5.0 | 5.0-7.0 | 8.5-10.0 |
| Elongation at break | D-412 | % | 110-130 | 95-110 | 75-85 | 65-80 | 55-65 | 35-45 |
| Shore hardness (A) | D-2240 | Scale A | 35-40 | 45-50 | 57-63 | 68-72 | 80-85 | 92-95 |
| Tensile tear resistance | D-624 | Kg/cm | 5.5-7.5 | 7.5-9.5 | 11-13 | 15.5-17.5 | 23-25 | 41-44 |

**TABELLE 18 GUMMIÄHNLICHE MATERIALIEN**

| PRIMARY MATERIAL: TANGOBLACKPLUS FLX980 / TANGOPLUS FLX930 | | | | | | | | |
|---|---|---|---|---|---|---|---|---|
| SECONDARY MATERIAL: VEROCLEAR RGD810 | | | | | | | | |
| PROPERTY | ASTM | UNITS | FLX9040-DM FLX9050-DM FLX9060-DM FLX9070-DM FLX9085-DM FLX9095-DM | | | | | |
| | | | FLX9940-DM FLX9950-DM FLX9960-DM FLX9970-DM FLX9985-DM FLX9995-DM | | | | | |
| Tensile strength | D-412 | MPa | 1.3-1.8 | 1.9-3.0 | 2.5-4.0 | 3.5-5.0 | 5.0-7.0 | 8.5-10.0 |
| Elongation at break | D-412 | % | 110-130 | 95-110 | 75-85 | 65-80 | 55-65 | 35-45 |
| Shore hardness (A) | D-2240 | Scale A | 35-40 | 45-50 | 57-63 | 68-72 | 80-85 | 92-95 |
| Tensile tear resistance | D-624 | Kg/cm | 5.5-7.5 | 7.5-9.5 | 11-13 | 15.5-17.5 | 23-25 | 41-44 |

**TABELLE 19 GUMMIÄHNLICHE MATERIALIEN**

| PRIMARY MATERIAL: TANGOGRAY™ FLX950 | | | |
|---|---|---|---|
| SECONDARY MATERIAL: VEROBLACKPLUS RGD875 | | | |
| PROPERTY | ASTM | UNITS | FLX9610-DM |
| Tensile strength | D-412 | MPa | 9-13 |
| Elongation at break | D-412 | % | 45-55 |
| Shore hardness (A) | D-2240 | Scale A | 75-85 |
| Tensile tear resistance | D-624 | Kg/cm | 45-50 |

**TABELLE 20 GUMMIÄHNLICHE MATERIALIEN**

| PRIMARY MATERIAL: TANGOGRAY FLX950 | | | |
|---|---|---|---|
| SECONDARY MATERIAL: TANGOBLACK FLX973 | | | |
| PROPERTY | ASTM | UNITS | FLX9510-DM |
| Tensile strength | D-412 | MPa | 1-3 |
| Elongation at break | D-412 | % | 35-45 |
| Shore hardness (A) | D-2240 | Scale A | 60-70 |
| Tensile tear resistance | D-624 | Kg/cm | 5.0-7.0 |

**TABELLE 21 GUMMIÄHNLICHE MATERIALIEN**

| PRIMARY MATERIAL: TANGOPLUS FLX930 / TANGOBLACKPLUS FLX980 | | | | | | | | |
|---|---|---|---|---|---|---|---|---|
| SECONDARY MATERIAL: HIGH TEMPERATURE RGD525 | | | | | | | | |
| PROPERTY | ASTM | UNITS | FLX9540-DM | FLX9550-DM | FLX9560-DM | FLX9570-DM | FL | X9595-DM |
| | | | FLX9640-DM | FLX9650-DM | F | LX9670-DM | FLX9685-DM | FLX9695-DM |
| Tensile strength | D-412 | MPa | 1.3-1.8 | 2.0-2.8 | 2.8-4.0 | 3.8-4.9 | 6.0-7.3 | 9.0-12 |
| Elongation at break | D-412 | % | 100-130 | 80-100 | 60-80 | 50-70 | 35-50 | 27-40 |
| Shore hardness (A) | D-2240 | Scale A | 39-41 | 52-55 | 60-67 | 70-78 | 85-87 | 95-96 |
| Tensile tear resistance | D-624 | Kg/cm | 5.0-7.0 | 8.0-10.0 | 10.5-12.5 | 13-15 | 22.5-24.5 | 45-47 |

**TABELLE 22 GUMMIÄHNLICHE MATERIALIEN**

| PRIMARY MATERIAL: TANGOBLACKPLUS FLX980 / TANGOPLUS FLX930 | | | | | | | | |
|---|---|---|---|---|---|---|---|---|
| SECONDARY MATERIAL: VEROBLACKPLUS RGD875 | | | | | | | | |
| PROPERTY | ASTM | UNITS | FLX2140-DM | FLX2150-DM | FLX2160-DM | FLX2170-DM | FLX2185-DM | FLX2195-DM |
| | | | FLX2040-DM | FLX2050-DM | FLX2060-DM | FLX2070-DM | FLX2085-DM | FLX2095-DM |
| Tensile strength | D-412 | MPa | 1.3-1.8 | 1.9-3.0 | 2.5-4.0 | 3.5-5 | 5.5-7.0 | 8.5-10 |
| Elongation at break | D-412 | % | 110-130 | 95-110 | 75-85 | 65-80 | 55-65 | 35-45 |
| Shore hardness (A) | D-2240 | Scale A | 35-40 | 45-50 | 57-63 | 68-72 | 80-85 | 92-95 |
| Tensile tear resistance | D-624 | Kg/cm | 5.5-7.5 | 7.5-9.5 | 11.0-13.0 | 15.5-17.5 | 23-25 | 41-44 |

**TABELLE 23 GUMMIÄHNLICHE MATERIALIEN**

| PRIMARY MATERIAL: TANGOBLACK FLX973 | | | | | |
|---|---|---|---|---|---|
| SECONDARY MATERIAL: VEROWHITEPLUS RGD835(I), | | | | | |
| VEROBLUE RGD840(III), VEROBLACKPLUS RGD875(IIII), RGD720(II) | | | | | |
| PROPERTY | ASTM | UNITS | FLX9110-DM(I) | FLX9120-DM (I) | FLX9130-DM (I) |
| | | | FLX9410-DM (II) | FLX9420-DM (II) | FLX9430-DM (II) |
| | | | FLX9210-DM (III) | FLX9220-DM (III) | FLX9230-DM (III) |
| | | | FLX9310-DM (IIII) | FLX9320-DM (IIII) | FLX9330-DM (IIII) |
| Tensile strength | D-412 | MPa | 2-4. | 3-5 | 7-11 |
| Elongation at break | D-412 | % | 45-55 | 35-45 | 35-45 |
| Shore hardness (A) | D-2240 | Scale A | 75-85 | 80-90 | 90-100 |
| Tensile tear resistance | D-624 | Kg/cm | 7-9 | 13-17 | 45-50 |

**TABELLE 24 GUMMIÄHNLICHE MATERIALIEN**

| PRIMARY MATERIAL: TANGOBLACKPLUS FLX930 / TANGOPLUS FLX980 | | | | | | | | |
|---|---|---|---|---|---|---|---|---|
| SECONDARY MATERIAL: DIGITAL ABS™ IVORY | | | | | | | | |
| | | | | | | | | |
| PROPERTY | ASTM | UNITS | FLX95540-DM | FLX95550-DM | | FLX95570-DM | FLX95585-DM | FLX2195-DM FLX95040-DM FLX95050-DM FLX95060-DM FLX95070-DM FLX95085-DM FLX2095-DM |
| | | | | | FLX95560-DM | | | |
| Tensile strength | D-412 | MPa | 2.3-2.5 | 3.2-3.5 | 3.8-4.3 | 4.7-5.0 | 7.0-7.7 | 9.8-10.6 |
| Elongation at break | D-412 | % | 145-155 | 125-135 | 95-110 | 80-90 | 50-65 | 40-50 |
| Shore hardness (A) | D-2240 | Scale A | 35-45 | 45-55 | 55-65 | 65-75 | 80-90 | 90-100 |
| Tensile tear resistance | D-624 | Kg/cm | 5.5-6.5 | 8.5-10.5 | 10.0-12.0 | 13-15 | 22-26 | 42-52 |

**TABELLE 25 GUMMIÄHNLICHE MATERIALIEN**

| PRIMARY MATERIAL: TANGOPLUS FLX930 / TANGOBLACKPLUS FLX980 | | | | | | | | |
|---|---|---|---|---|---|---|---|---|
| SECONDARY MATERIAL: RIGUR | | | | | | | | |
| PROPERTY | ASTM | UNIT | FLX4610-DM | FLX1650-DM | FLX4660-DM | FLX1670-DM | FLX1635-DM | FLX1695-DM |
| | | | FLX4840-DM | FLX4850-DM | FLX4860-DM | FLX4870-DM | FLX4885-DM | FLX4895-DM |
| Tensile strength | D-412 | MPa | 1.3-1.8 | 1.9-3.0 | 2.5-4.0 | 3.5-5.0 | 5.0-7.0 | 8.5-10.0 |
| Elongation at break | D-412 | % | 110-130 | 95-110 | 75-85 | 65-80 | 55-65 | 35-45 |
| Shore hardness (A) | D-2240 | Scale A | 35-40 | 45-50 | 57-63 | 68-72 | 80-85 | 92-95 |
| Tensile tear resistance | D-624 | Kg/cm | 5.5-7.5 | 7.5-9.5 | 11-13 | 15.5-17.5 | 23-25 | 41-44 |

## Patentansprüche

1. Verfahren zum Herstellen einer kieferorthopädischen Korrekturvorrichtung (2) mit einem Draht oder einer Wand (4), der oder die an einer Zahnoberfläche anliegt und der oder die ein dynamisches synthetisches Material aufweist, das bei Zutritt von Wasser bzw. Speichel oder Wärme in berechenbarer Weise seine Gestalt ändert, mit den Schritten
- Erfassen der Ist-Stellung eines zu korrigierenden Zahns
- Berechnen der Soll-Stellung des zu korrigierenden Zahns
- Berechnen der Wand (4) oder des Drahts der Korrekturvorrichtung (2) unter Berücksichtigung der Ist-Stellung, der Soll-Stellung und der Gestaltänderung des dynamischen synthetischen Materials
- Herstellen der Korrekturvorrichtung (2) mit der an der Zahnoberfläche in der Ist-Stellung anliegenden Wand (4) oder dem an der Zahnoberfläche anliegenden Draht, die oder der mindestens abschnittsweise bei Zutritt von Wasser bzw. Speichel oder Wärme in berechneter Weise ihre Gestalt verändert, um den Zahn in Richtung auf die Soll-Stellung zu bewegen.

2. Verfahren zum Herstellen einer Korrekturvorrichtung nach Anspruch 1, **dadurch gekennzeichnet, dass** dynamisches und statisches synthetisches Material eingesetzt werden.

3. Verfahren zum Herstellen einer Korrekturvorrichtung nach Anspruch 1 oder 2, **dadurch gekennzeichnet, dass** die Wand (4) oder der Draht mit Abschnitten (6, 8) unterschiedlicher Wandstärke oder unterschiedlichem Drahtdurchmesser hergestellt wird.

4. Verfahren zum Herstellen einer Korrekturvorrichtung nach mindestens einem der Ansprüche 1 bis 3, **dadurch gekennzeichnet, dass** die Wand (4) Öffnungen aufweist.

5. Verfahren zum Herstellen einer Korrekturvorrichtung nach mindestens einem der Ansprüche 1 bis 4, **dadurch gekennzeichnet, dass** die Wand (4) oder der Draht einen mehrlagigen oder abschnittsweisen Aufbau aufweist.

6. Verfahren zum Herstellen einer Korrekturvorrichtung nach mindestens einem der Ansprüche 1 bis 5, **dadurch gekennzeichnet, dass** das dynamische synthetische Material in Verbindung mit anderen Werkstoffen, insbesondere Metall, verarbeitet wird.

7. Verfahren nach mindestens einem der Ansprüche 1 bis 6, **dadurch gekennzeichnet, dass** die Korrekturvorrichtung (2) in einem Druckverfahren hergestellt wird, bei dem 3D-Drucker, die mehrere unterschiedliche Materialien verarbeiten können, eingesetzt werden.

8. Verfahren zum Herstellen einer Korrekturvorrichtung nach mindestens einem der Ansprüche 1 bis 7, **dadurch gekennzeichnet, dass** eine Folge von Korrekturvorrichtungen (2) hergestellt wird, bei denen nach Erreichen einer Soll-Stellung einer ersten Schiene eine neue Ist-Stellung erfasst und eine zweite Korrekturvorrichtung (2) mit einer neuen Soll-Stellung hergestellt wird.

## Claims

1. A method for producing an orthodontic correcting device (2) having a wire or a wall (4), which wire or wall rests on a tooth surface and has a dynamic synthetic material that changes its shape in a predictable way upon contact with water or saliva or heat, having the steps of
- detecting the actual position of a tooth to be corrected,
- calculating the nominal position of the tooth to be corrected,
- calculating the wall (4) or wire of the correcting device (2), taking into account the actual position, the nominal position and the change in shape of the dynamic synthetic material,
- producing the correcting device (2) with the wall (4) resting on the tooth surface in the actual position or the wire resting on the tooth surface, which wall or wire changes its shape at least in sections in a way as calculated upon contact with water or saliva or heat in order to move the tooth in the direction of the nominal position.

2. The method for producing a correcting device according to claim 1, **characterized in that** dynamic and static synthetic materials are deployed.

3. The method for producing a correcting device according to claim 1 or 2, **characterized in that** the wall (4) or the wire is produced with sections (6, 8) of different wall thickness or of different wire diameter.

4. The method for producing a correcting device according to at least one of claims 1 to 3, **characterized in that** the wall (4) has openings.

5. The method for producing a correcting device according to at least one of claims 1 to 4, **characterized in that** the wall (4) or the wire has a multilayer or sectional construction.

6. The method for producing a correcting device according to at least one of claims 1 to 5, **characterized in that** the dynamic synthetic material is processed in conjunction with other materials, in particular metal.

7. The method according to at least one of claims 1 to 6, **characterized in that** the correcting device (2) is produced in a printing method, in which 3D printers that can process multiple different materials are deployed.

8. The method for producing a correcting device according to at least one of claims 1 to 7, **characterized in that** a series of correcting devices (2) is produced, in which after a nominal position of a first splint has been reached, a new actual position is detected and a second correcting device (2) is produced with a new nominal position.

## Revendications

1. Procédé pour la fabrication d'un dispositif de correction orthodontique (2) avec un fil métallique ou une paroi (4) s'appliquant sur une surface de dent et présentant un matériau synthétique dynamique, lequel change de forme d'une manière prévisible en présence d'eau ou de salive ou de chaleur, comprenant les étapes suivantes :
- détection de la position réelle d'une dent à corriger,
- calcul de la position de consigne de la dent à corriger,
- calcul de la paroi (4) ou du fil métallique du dispositif de correction (2) en tenant compte de la position réelle, de la position de consigne et du changement de forme du matériau synthétique dynamique,
- fabrication du dispositif de correction (2) avec la paroi (4) appliquée sur la surface de dent dans la position réelle ou avec le fil métallique appliqué sur la surface de dent, laquelle ou lequel change de forme au moins par sections d'une manière calculée en présence d'eau ou de salive ou de chaleur, afin de déplacer la dent vers la position de consigne.

2. Procédé pour la fabrication d'un dispositif de correction selon la revendication 1, **caractérisé en ce que** des matériaux synthétiques dynamiques et statiques sont utilisés.

3. Procédé pour la fabrication d'un dispositif de correction selon la revendication 1 ou 2, **caractérisé en ce que** la paroi (4) ou le fil métallique est fabriqué (e) avec des sections (6, 8) présentant différentes épaisseurs de paroi ou différents diamètres de fil métallique.

4. Procédé pour la fabrication d'un dispositif de correction selon l'une au moins des revendications 1 à 3, **caractérisé en ce que** la paroi (4) présente des ouvertures.

5. Procédé pour la fabrication d'un dispositif de correction selon l'une au moins des revendications 1 à 4, **caractérisé en ce que** la paroi (4) ou le fil métallique présente une structure multicouche ou à sections.

6. Procédé pour la fabrication d'un dispositif de correction selon l'une au moins des revendications 1 à 5, **caractérisé en ce que** le matériau synthétique dynamique est traité en association avec d'autres matières, en particulier du métal.

7. Procédé selon l'une au moins des revendications 1 à 6, **caractérisé en ce que** le dispositif de correction (2) est fabriqué à l'aide d'un procédé d'impression, dans lequel des imprimantes 3D capables de traiter plusieurs matériaux différents sont utilisées.

8. Procédé pour la fabrication d'un dispositif de correction selon l'une au moins des revendications 1 à 7, **caractérisé en ce qu'**une série de dispositifs de correction (2) est fabriquée, dans lesquels une nouvelle position réelle est détectée après l'atteinte d'une position de consigne d'une première attelle et un deuxième dispositif de correction (2) est fabriqué avec une nouvelle position de consigne.
